# EUROPEAN PATENT APPLICATION

(11) **EP 4 307 141 A1**
(43) Date of publication of application: **17.01.2024**
(21) Application number: 21930270.0
(22) Date of filing: 21.09.2021
(51) Int. Cl.: G06F 21/44, G06F 21/62, H04L 9/08

(54) **CONTROL SYSTEM AND CONTROL METHOD THEREFOR**

(30) Priority: 11.03.2021 JP 2021038923
(71) Applicant: OMRON Corporation, Kyoto 600-8530 (JP)
(72) Inventor: KITAMURA, Yasuhiro, Kyoto-shi, Kyoto 600-8530 (JP); IGARASHI, Hisanori, Kyoto-shi, Kyoto 600-8530 (JP); OKAMURA, Kotaro, Kyoto-shi, Kyoto 600-8530 (JP)
(74) Representative: Mewburn Ellis LLP
(86) International application number: PCT/JP2021/034475
(87) International publication number: WO 2022/190422

(57) **Abstract**

Reliability of an instrument connected to a control device is verified. A control system includes a control unit (200) and a communication unit (210). The control unit (200) and the communication unit (210) are configured to be detachable. The control unit (200) authenticates the communication unit (210) connected to the control unit (200) using a common key, and allows the communication unit (210) to access data in the control unit (200) based on a result of the authentication checking that the communication unit (210) has the common key.

## Description

### TECHNICAL FIELD

The present disclosure relates to a control system, and more specifically, to authentication of an instrument included in the control system.

### BACKGROUND ART

An environment in which a factory automation (FA) control device is connected to the Internet or a cloud terminal is provided. In this environment, regarding the connection of the control device to a terminal or a network outside a factory, security measures including handling of various incidents including leakage of know-how are implemented.

Regarding the security of the control system, for example, Japanese Patent Laying-Open No. 2019-096149 (PTL 1) discloses a control device includes "a program execution unit that executes a program produced according to a control target, a detection unit that determines whether a security event is generated in an external access to a control device, and a notification unit that notifies a notification destination according to the generated security event when it is detected that the security event is generated. The security event includes an event that does not conform to a predetermined rule" (see [Abstract]).

### CITATION LIST

### PATENT LITERATURE

PTL 1: Japanese Patent Laying-Open No. 2019-096149

### SUMMARY OF INVENTION

### TECHNICAL PROBLEM

According to the technique disclosed in PTL 1, reliability of the instrument connected to the control device cannot be verified. Accordingly, there is a need for a technique for verifying the reliability of the instrument connected to the control device.

The present disclosure has been made in view of the above background, and an object in one aspect of the present disclosure is to provide a technique for verifying reliability of the instrument connected to the control device.

### SOLUTION TO PROBLEM

According to an example of the present disclosure, a control system is provided. The control system includes a control unit and a communication unit. The control unit and the communication unit are configured to be detachable. The control unit authenticates the communication unit connected to the control unit using a common key, and allows the communication unit to access data in the control unit based on a fact that the communication unit is checked to have the common key as a result of authentication.

According to this disclosure, the control system can allow the communication unit to access the data in the control unit while verification of the reliability of the communication unit is completed.

In the above disclosure, the control system further includes a device configured to distribute the common key. The device receives an instruction to distribute the common key, and transmits the common key to the control unit and the communication unit based on a fact that processing for authenticating a user who inputs the instruction to distribute the common key succeeds.

According to this disclosure, the control system may generate the common key in the device and distribute the common key to the control unit and the communication unit.

In the above disclosure, when the communication unit is replaced with a new communication unit, the control unit generates a new common key and sends the new common key to the new communication unit. The sending of the new common key to the new communication unit includes reception of input of an instruction to generate the new common key, and transmission of the generated new common key to the communication unit based on a fact that the processing for authenticating the user who inputs the instruction to generate the common key succeeds.

According to this disclosure, the control system may generate the new common key in the control unit based on the replacement of the communication unit, and transmit the common key to the communication unit.

In the above disclosure, the control unit is connected to the new communication unit through a bus, and distributes the common key to the new communication unit through the bus.

According to this disclosure, the control unit may distribute the common key to the new communication unit via a highly secure bus.

In the above disclosure, the control unit receives a setting of the communication unit from the communication unit through the bus during replacement with the new communication unit, and transmits the setting of the communication unit to the new communication unit through the bus after distribution of the common key.

According to this disclosure, the control unit can take over the setting of the communication unit before the replacement to the new communication unit.

In the above disclosure, the communication unit stores the setting of the communication unit in a detachable storage medium during the replacement with the new communication unit. The new communication unit reads the setting of the communication unit from the detachable storage medium after obtaining the new common key.

According to this disclosure, the new communication unit can take over the setting of the communication unit before replacement after acquiring the common key.

According to another example of the present disclosure, a control method for a control system is provided. The control method includes: authenticating the communication unit connected to the control unit using a common key; and allowing the communication unit to access data in the control unit based on a fact that the communication unit is checked to have the common key as a result of authentication.

According to this disclosure, the communication unit can be allowed to access the data in the control unit while verification of reliability of the communication unit is completed.

In the above disclosure, the control method further includes: receiving an instruction to distribute the common key; and transmitting the common key to the control unit and the communication unit based on a fact that processing for authenticating a user who inputs the instruction to distribute the common key succeeds.

According to this disclosure, the common key may be generated and distributed to the control unit and the communication unit.

In the above disclosure, the control method further includes generating a new common key based on that the communication unit is replaced with a new communication unit, and sending the new common key to the new communication unit. The sending the new common key to the new communication unit includes: receiving input of an instruction to generate the new common key; and transmitting the generated new common key to the communication unit based on a fact that the processing for authenticating the user who inputs the instruction to generate the common key succeeds.

According to the disclosure, the new common key may be generated based on replacement of the communication unit, and the common key may be transmitted to the communication unit.

In the above disclosure, the new common key is distributed from the control unit to the new communication unit through a bus.

According to this disclosure, the common key may be distributed to the new communication unit through a highly-secure bus.

In the above disclosure, the control method further includes: transmitting a setting of the communication unit from the communication unit to the control unit through the bus during replacement with the new communication unit; and transmitting the setting of the communication unit from the control unit to the new communication unit through the bus after the distribution of the common key,.

According to this disclosure, the new communication unit can take over the setting of the communication unit before replacement.

In the above disclosure, the control method further includes: storing the setting of the communication unit in a detachable storage medium during replacement with the new communication unit; and reading the setting of the communication unit from the detachable storage medium into the new communication unit after obtaining the new common key.

According to this disclosure, the new communication unit can take over the setting of the communication unit before replacement after acquiring the common key.

### ADVANTAGEOUS EFFECTS OF INVENTION

According to an embodiment, the reliability of the instrument connected to the control device can be verified.

The foregoing and other objects, features, aspects and advantages of the present disclosure content will become more apparent from the following detailed description of the present disclosure when taken in conjunction with the accompanying drawings.

### BRIEF DESCRIPTION OF DRAWINGS

Fig. 1 is a view schematically illustrating an overall configuration of a network system 100 including a control system 1 according to an embodiment.
Fig. 2 is a view illustrating an example of a problem that can be generated during replacement of a security unit 210.
Fig. 3 is a view illustrating an example of a method for authenticating the security unit 210 by a control unit 200.
Fig. 4 is a view illustrating a configuration example of the control system 1 of the embodiment.
Fig. 5 is a schematic diagram illustrating a hardware configuration example of the control unit 200 configuring the control system 1 of the embodiment.
Fig. 6 is a schematic diagram illustrating a hardware configuration example of the security unit 210 configuring the control system 1 of the embodiment.
Fig. 7 is a schematic diagram illustrating a hardware configuration example of a support device 110 that can be connected to the control system 1 of the embodiment.
Fig. 8 is a view illustrating an example of a procedure of distributing a common key and an authentication procedure using the common key during setup.
Fig. 9 is a view illustrating an example of the procedure of distributing the common key and the authentication procedure using the common key during exchange of the security unit 210.
Fig. 10 is a flowchart illustrating an example of the procedure of distributing the common key and the authentication procedure using the common key during the setup.
Fig. 11 is a flowchart illustrating an example of the procedure of distributing the common key and the authentication procedure using the common key during the exchange of the security unit 210.

### DESCRIPTION OF EMBODIMENT

Hereinafter, an embodiment of the technical idea according to the present disclosure will be described with reference to the drawings. In the following description, the same component is denoted by the same reference numeral. Names and functions of such components are also the same. Accordingly, the detailed description thereof will not be repeated.

### <A. Application example>

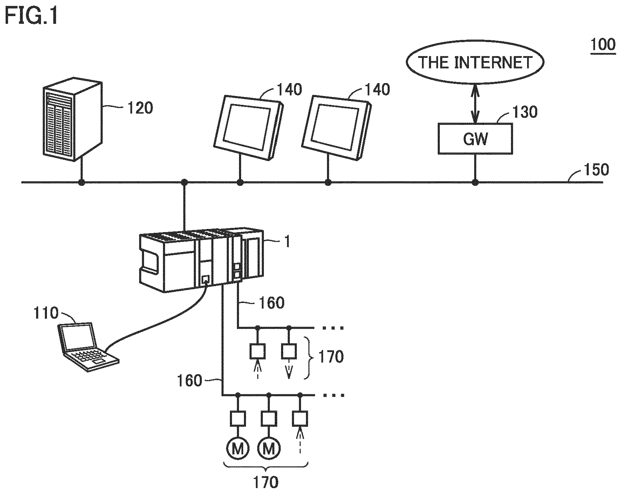

With reference to Figs. 1 to 3, a scene to which a technique according to an embodiment is applied will be described first. A system such as a control system 1 in the following description may be configured by one or a plurality of devices. Furthermore, the system may cooperate with a part of the device or another device.

Fig. 1 is a view schematically illustrating an overall configuration of a network system 100 including the control system 1 of the embodiment.

A network system 100 includes the control system 1, a server device 120, a display device 140, and a gateway (GW) 130 as a configuration. These configurations can be connected to each other through a network 150. Network 150 is connected to the Internet that is an external network through gateway 130. Ethernet (registered trademark) or EtherNet/IP (registered trademark), which is a general network protocol, may be implemented as network 150.

Control system 1 is connected to a control target 170 including field facilities and devices and various devices (sensors, actuators, or the like) disposed therein through a field network 160.

Preferably a bus or a network that performs fixed period communication guaranteeing a data arrival time is adopted as field network 160. In one aspect, field network 160 may be implemented by EtherCAT (registered trademark) as the bus or the network that performs such the fixed cycle communication.

A support device 110 provides a support tool that supports a user to operate control system 1. Support device 110 may have a function of installing a program in control system 1. In one aspect, support device 110 may be a personal computer, a tablet, a smartphone, or any other information processing device.

As an example, support device 110 is detachably connected to control system 1 by a universal serial bus (USB). In the USB communication, a communication protocol that performs user authentication can be adopted in order to ensure communication security. As another example, support device 110 may communicate with control system 1 through network 150.

As an example, server device 120 is a database system or a manufacturing execution system (MES). The manufacturing execution system acquires information from a manufacturing device or facility of the control target to monitor and manage entire production, and can also handle order information, quality information, shipping information, other information related to production, and the like. Furthermore, as another example, server device 120 may be a device that provides an information-related service (processing for acquiring various types of information from the control target and performing macro or micro analysis or the like).

Display device 140 receives an operation from the user, outputs a command or the like corresponding to the user operation to control system 1, and graphically displays an arithmetic result or the like in control system 1. In one aspect, display device 140 may include an arbitrary output device such as a liquid crystal display or an organic electro-luminescence (EL) display. Furthermore, display device 140 may include an arbitrary input device such as a touch panel or a switch.

Gateway 130 executes protocol conversion between network 150 and the external network (the Internet) and processing as a firewall.

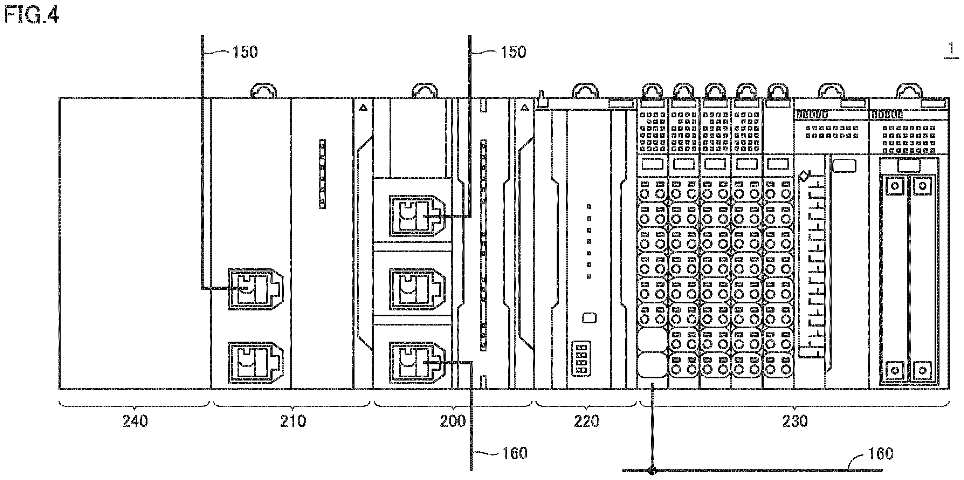

In the configuration of Fig. 1, as an example, control system 1 may include a control unit 200 and a security unit 210 (see Fig. 4). Control unit 200 may be a programmable controller (PLC) or the like, and controls the control target by executing a control program. Furthermore, security unit 210 stores a setting regarding security of control system 1, more specifically, control unit 200. The security setting includes a setting preventing unintended duplication of the control program, namely, unauthorized duplication. Security unit 210 can protect an information asset and the like in control unit 200 by monitoring communication between control system 1 and other devices (a device on network 150 or a device on the Internet). Security unit 210 can also be said to be a communication unit because security unit 210 provides a secure communication function to control system 1.

Security unit 210 is configured to be detachable from control unit 200. Consequently, when security unit 210 fails, the user can separate failed security unit 210 from control unit 200 to connect new security unit 210 to control unit 200. However, when a malicious person connects security unit 210 to control unit 200, there is a possibility that the information asset in control unit 200 is stolen. Accordingly, control unit 200 of the embodiment authenticates security unit 210 using the common key. Control unit 200 verifies validity of security unit 210 itself by the authentication using the common key, and then starts the communication with security unit 210. In this way, control unit 200 of the embodiment can protect the information asset in control unit 200 even when the malicious person connects security unit 210 to control unit 200.

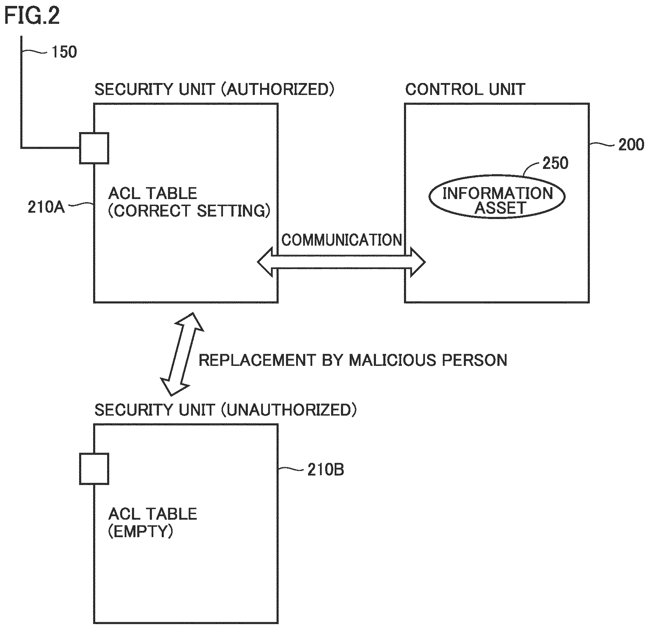

Fig. 2 is a view illustrating an example of a problem that can be generated during replacement of security unit 210. In the example of Fig. 2, a security unit 210A is replaced with a security unit 210B. Security unit 210A is an authorized security unit and stores a correct access control list (ACL) table. Security unit 210B is an unauthorized security unit prepared by the malicious person and stores the empty ACL table.

When unauthorized security unit 210B is connected to control unit 200, because the ACL table of unauthorized security unit 210B is empty, security unit 210B allows all access from network 150 to control unit 200. Consequently, the malicious person can freely access an information asset 250 in control unit 200 through network 150. In order to prevent such leakage of information asset 250, desirably control unit 200 authenticates security unit 210 connected to control unit 200 before the start of transmission and reception of data.

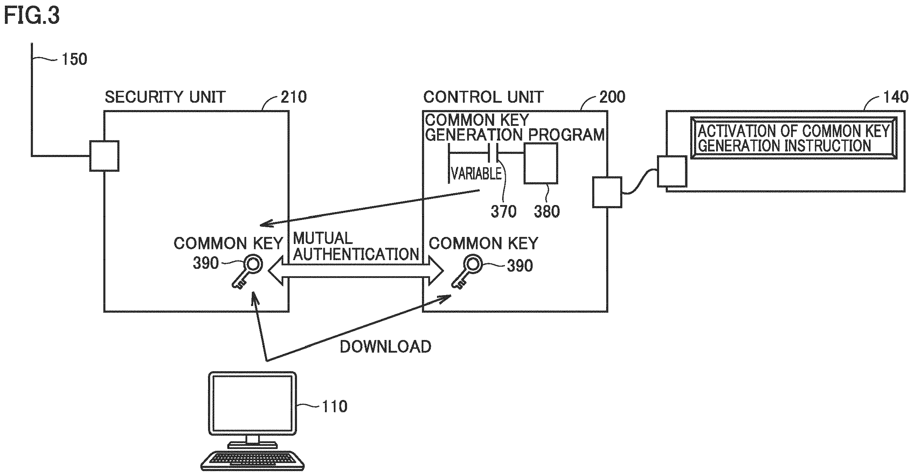

Fig. 3 is a view illustrating an example of a method for authenticating security unit 210 by control unit 200. Control unit 200 of the embodiment authenticates security unit 210 using the common key. In the common key authentication, a method for distributing the common key is required. The distribution of the common key is mainly executed at two timings, namely, at the time of setup of control system 1 and at the time of replacement of security unit 210.

First, a procedure distributing the common key at the first timing (at the time of setting up control system 1) will be described. At the time of setting up control system 1, for example, the user distributes a common key 390 to control unit 200 and security unit 210 using support device 110. Support device 110 determines whether the user operating support device 110 has the authority to distribute common key 390 by arbitrary authentication means such as password authentication or biometric authentication. Support device 110 executes the distribution processing of common key 390 only when determining that the user operating support device 110 has the authority to distribute common key 390. In one aspect, user authentication processing may be performed after receiving the distribution request of common key 390. In another aspect, the user authentication processing may be performed before accepting the distribution request of common key 390.

Support device 110 can distribute common key 390 to control unit 200 and security unit 210 by arbitrary communication means. In one aspect, support device 110 may distribute common key 390 to control unit 200 and security unit 210 through a USB interface or the like. In another aspect, support device 110 may distribute common key 390 to control unit 200 and security unit 210 through network 150. Support device 110 may distribute the common key to each of the plurality of control systems 1 (the plurality of control units 200 and security unit 210) through network 150. The common keys distributed to control systems 1 are different from each other.

After the activation of control system 1, control unit 200 and security unit 210 execute mutual authentication using distributed common key 390. Control unit 200 starts the communication with security unit 210 based on the successful authentication. In one aspect, control unit 200 may execute the authentication processing using common key 390 every time the communication is performed. In another aspect, when detecting attachment or detachment of security unit 210, control unit 200 may execute the authentication processing using common key 390.

As described above, during the setup of control system 1, the user having the authority to generate common key 390 distributes common key 390 to control unit 200 and security unit 210 using support device 110. As a result, control unit 200 can start the operating in the state of being connected to security unit 210 in which the reliability is verified.

Subsequently, a procedure distributing the common key at the second timing (at the time of replacing security unit 210) will be described. In a factory or the like, when each unit included in control system 1 fails, it is required that the failed unit can be easily replaced without using a tool. Control unit 200 of the embodiment has a common key generation function described below in order to achieve both ease of the replacement of the unit connected to control unit 200 and security.

It is assumed that security unit 210 is separated from control unit 200 and it is assumed that new security unit 210 is connected to control unit 200. In this case, as an example, the user can input a common key generation instruction to a touch panel or the like of display device 140. Display device 140 transmits the common key generation instruction to control unit 200. In one aspect, the user may use any information processing device such as support device 110 instead of display device 140.

Control unit 200 determines whether the user operating display device 140 has the authority to distribute common key 390 by arbitrary authentication means such as the password authentication or the biometric authentication. As an example, the user can input a password, biological information, or the like from display device 140 or the like. Control unit 200 generates new common key 390 using a common key generation program 380 only when determining that the user operating display device 140 has the authority to distribute common key 390 (for example, when a variable 370 indicating the authority of the user = TRUE). Common key generation program 380 may be implemented as hardware.

In one aspect, the user authentication processing may be performed after the common key generation instruction is received. In another aspect, the user authentication processing may be performed before the common key generation instruction is received. After generating new common key 390, control unit 200 transmits new common key 390 to security unit 210 through the bus. Control unit 200 authenticates new security unit 210 using distributed new common key 390.

As described above, at both the first timing and the second timing, the user having the authority to distribute common key 390 distributes common key 390 to both control unit 200 and security unit 210. This allows control unit 200 and security unit 210 to transmit and receive the data only after completion of the authentication by common key 390. In other words, security unit 210 can access the data (information asset 250) in control unit 200 only after checking that security unit 210 has common key 390. As a result, control unit 200 may prevent information leakage of information asset 250.

### <B. Hardware configuration>

With reference to Figs. 4 to 7, a hardware configuration of a main device or system (control system 1, control unit 200, security unit 210, and support device 110) of the embodiment will be described below.

### (a. Appearance of control system 1)

Fig. 4 is a view illustrating a configuration example of control system 1 of the embodiment. Control system 1 includes control unit 200, security unit 210, a safety unit 220, one or a plurality of functional units 230, and a power supply unit 240.

Control unit 200 and security unit 210 are connected to each other through a bus of PCI Express or the like. In addition, control unit 200, safety unit 220, the one or more functional units 230, and power supply unit 240 are mutually connected through an internal bus.

Control unit 200 controls a control target by executing a control program. The control program includes a program such as IO refresh and control arithmetic processing for exchanging signals with an instrument and a device to be controlled, and various devices (sensors, actuators, or the like) disposed in the instrument and the device. Specifically, the IO refresh collects the output of an order value calculated in control unit 200 to the control target, or the input value from the control target. In the control arithmetic processing, for example, the order value or a controlled value based on the input value collected by the IO refresh is calculated. The control program having such a function is also an example of a "user program" including a program produced by the user or a development company according to a required specification of the control target.

Security unit 210 sets the security of control system 1, more specifically, of control unit 200. The security setting (ACL table) includes a setting preventing unintended duplication of the control program, namely, unauthorized duplication.

Safety unit 220 executes control arithmetic operation implementing the safety function regarding the control target independently of control unit 200. Functional unit 230 provides various functions implementing the control on various control targets by control system 1.

Functional unit 230 may typically include an I/O unit, a safety I/O unit, a communication unit, a motion controller unit, a temperature adjustment unit, a pulse counter unit, and the like. Examples of the I/O unit include a digital input (DI) unit, a digital output (DO) unit, an analog output (AI) unit, an analog output (AO) unit, a pulse catch input unit, and a composite unit obtained by mixing a plurality of types. The safety I/O unit is in charge of I/O processing regarding the safety control. Power supply unit 240 supplies power of a predetermined voltage to each unit configuring control system 1.

### (b. Hardware configuration of control unit 200)

A hardware configuration example of control unit 200 included in control system 1 of the embodiment will be described below.

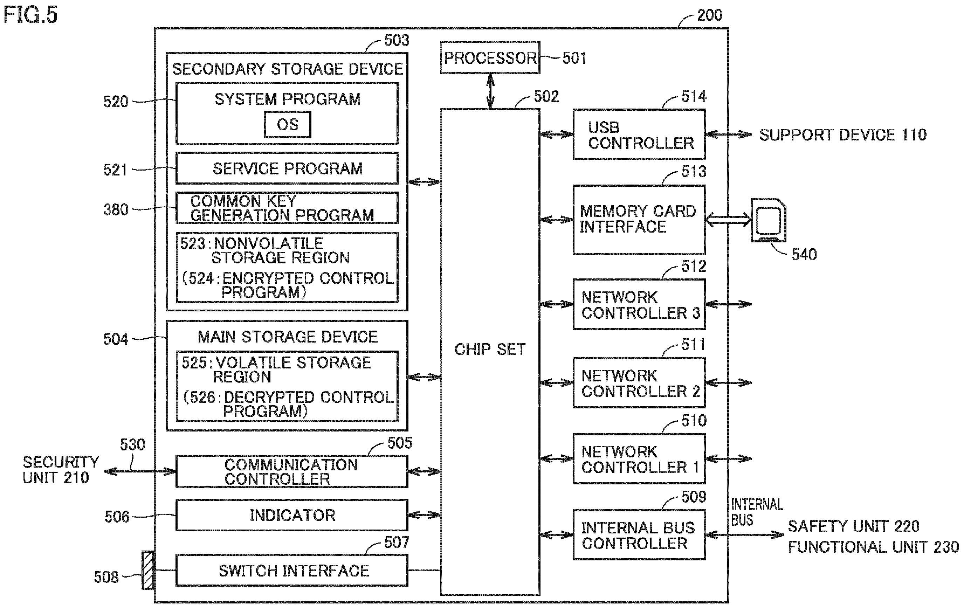

Fig. 5 is a schematic diagram illustrating a hardware configuration example of control unit 200 configuring control system 1 of the embodiment. With reference to Fig. 5, control unit 200 includes a processor 501 such as a central processing unit (CPU) or a graphical processing unit (GPU), a chip set 502, a secondary storage device 503, a main storage device 504, a communication controller 505, a USB controller 514, a memory card interface 513, a network controller 510, 511, 512, an internal bus controller 509, an indicator 506, and a switch interface 507 as main components.

Processor 501 reads various programs stored in secondary storage device 503 and develops and executes the various programs in main storage device 504, thereby implementing various pieces of processing including the control arithmetic operation and service processing. Chip set 502 mediates the data exchange between processor 501 and each component, thereby implementing the processing of control unit 200 as a whole.

Main storage device 504 includes a volatile storage device such as a dynamic random access memory (DRAM) or a static random access memory (SRAM). At least a part of these volatile storage devices configures a volatile storage region 525 storing a decrypted control program 526.

Secondary storage device 503 typically includes a nonvolatile storage device such as a hard disk drive (HDD) or a solid state drive (SSD), a read only memory (ROM), an erasable programmable read only memory (EPROM), or an electrically erasable programmable read only memory (Electrically Erasable Programmable Read-Only Memory). At least a part of the non-volatile storage device configures a nonvolatile storage region 523 storing an encrypted control program 524.

Secondary storage device 503 further stores a system program 520 including an operating system (OS), a service program 521, common key generation program 380, and the like. System program 520 provides a program execution environment operating user programs such as decrypted control program 526 and service program 521. Common key generation program 380 generates the common key distributed to the instrument connected to control unit 200.

Processor 501 determines whether the user who inputs (or transmits) the common key generation instruction has the authority to generate the common key by arbitrary authentication means such as the password authentication or the biometric authentication based on the acceptance (or reception) of the input of the common key generation instruction. Processor 501 generates the new common key using common key generation program 380 only when determining that the user who inputs (or transmits) the common key generation instruction has the authority to generate the common key. In one aspect, the user authentication processing may be performed after the common key generation instruction is received. In another aspect, the user authentication processing may be performed before the common key generation instruction is received.

Processor 501 stores the generated common key in secondary storage device 503. In addition, processor 501 transmits the generated common key to security unit 210 through a bus 530. Further, processor 501 uses the common key during mutual authentication with security unit 210. In one aspect, control unit 200 may distribute the common key to any device connected to control unit 200 such as safety unit 220 and functional unit 230 in addition to security unit 210. When receiving the common key from support device 110 or the like, processor 501 stores the received common key in secondary storage device 503.

Communication controller 505 transmits and receives data to and from security unit 210 through bus 530. For example, communication controller 505 can be implemented by a communication chip corresponding to a bus such as PCI Express.

Indicator 506 notifies an operation state or the like of control unit 200, and is configured by one or a plurality of light emitting diodes (LEDs) or the like arranged on a unit surface. As an example, switch interface 507 is connected to dip switch 508, and outputs an ON or OFF signal of dip switch 508 to processor 501.

Internal bus controller 509 transmits and receives the data to and from safety unit 220 configuring control system 1 and one or a plurality of functional units 230 through the internal bus. For the internal bus, a communication protocol unique to a manufacturer may be used, or a communication protocol that is the same as or compliant with any of industrial network protocols may be used.

Each of network controllers 510, 511, 512 is in charge of the data exchange with any device through the network. Network controller 510, 511, 512 may adopt an industrial network protocol such as EtherCAT (registered trademark), EtherNet/IP (registered trademark), DeviceNet (registered trademark), or CompoNet (registered trademark).

Memory card interface 513 is configured such that a memory card 540 such as an SD card is detachable, and can write a user program or data such as various settings to memory card 540 or read the program or data such as various settings from memory card 540. USB controller 514 can transmit and receive data to and from any information processing device including support device 110 through USB connection. In one aspect, in addition to memory card interface 513, control unit 200 may include an external instrument interface to which any storage medium can be connected.

Although the configuration example in which required functions are provided by processor 501 executing the program has been described in Fig. 5, some or all of these provided functions may be implemented using a dedicated hardware circuit (for example, an application specific integrated circuit (ASIC) and a field-programmable gate array (FPGA)). Alternatively, the main part of control unit 200 may be implemented using hardware (for example, an industrial personal computer based on a general-purpose personal computer) according to a general-purpose architecture. In this case, the plurality of OSs having different uses may be executed in parallel using a virtualization technology, and the required application may be executed on each OS.

### (c. Hardware configuration of security unit 210)

A hardware configuration example of security unit 210 included in control system 1 of the embodiment will be described below.

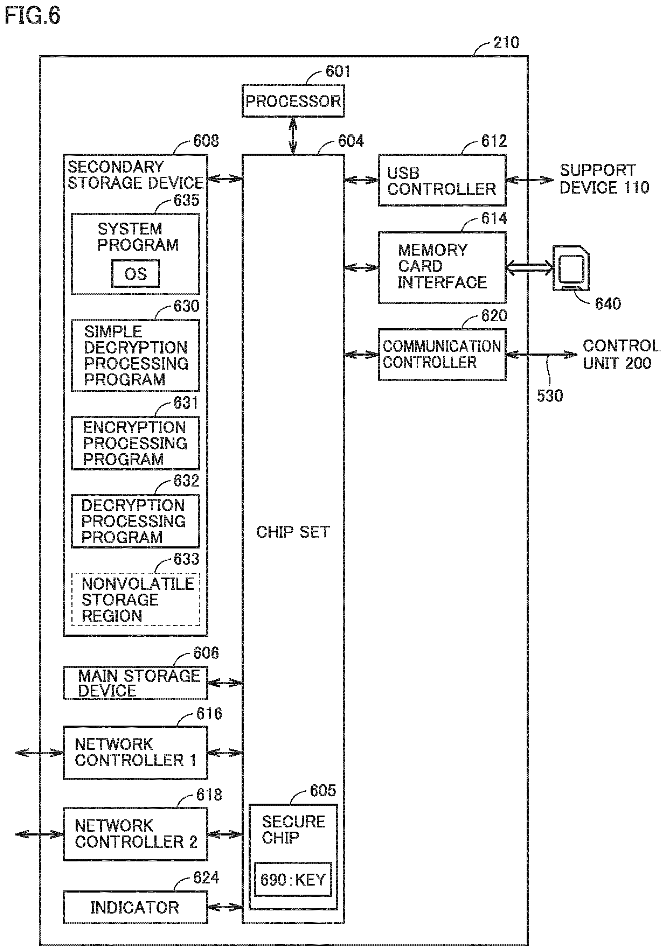

Fig. 6 is a schematic diagram illustrating the hardware configuration example of security unit 210 configuring control system 1 of the embodiment. Security unit 210 includes a processor 601 such as a CPU or a GPU, a chip set 604, a main storage device 606 including the volatile storage region, a secondary storage device 608 including as nonvolatile storage region 633, a communication controller 620, a USB controller 612, a memory card interface 614, a network controller 616, 618, and an indicator 624 as main components. Because main storage device 606 and secondary storage device 608 can be configured similarly to main storage device 504 and secondary storage device 503 of control unit 200, the description thereof will not be repeated.

Processor 601 reads various programs stored in secondary storage device 608, develops the programs in main storage device 606, and executes the programs to implement various functions. Processor 601 stores the common key received from control unit 200, support device 110, or the like in secondary storage device 608. Furthermore, processor 601 uses the common key during the mutual authentication with control unit 200.

Chip set 604 mediates the data exchange between processor 601 and each component, thereby implementing the processing of security unit 210 as a whole. Chip set 604 includes various chips mounted on a substrate. One of the chips mounted on the substrate is a secure chip 605 that stores a key 690. Key 690 is used by an encryption processing program 631 and a decryption processing program 632.

Secondary storage device 608 stores various processing programs operating on the execution environment provided by a system program 635 in addition to system program 635 including the OS. The various processing programs include a simple decryption processing program 630 decrypting a simple encrypted control program, an encryption processing program 631 encrypting the control program with key 690, and a decryption processing program 632 decrypting the encrypted control program.

Communication controller 620 is in charge of the data exchange with control unit 200. Similarly to communication controller 505 of control unit 200, for example, communication controller 620 can be implemented by a communication chip corresponding to PCI Express or the like applied to bus 530.

USB controller 612 is in charge of the data exchange with an arbitrary information processing device including support device 110 through the USB connection.

Memory card interface 614 is configured to be detachable from memory card 640 such as an SD card, and can write the data such as a program or various settings to a memory card 640 or read the data such as a program or various settings from memory card 640. Security unit 210 may include the external instrument interface to which any storage medium can be connected in addition to memory card interface 614.

Each of network controllers 616, 618 is in charge of the data exchange with any device through the network. Network controllers 616, 618 may adopt a general-purpose network protocol such as Ethernet (registered trademark).

Indicator 624 notifies an operating state or the like of security unit 210, and is configured by one or a plurality of LEDs or the like disposed on a unit surface.

Although the configuration example in which the required functions are provided by processor 601 executing the program has been illustrated in Fig. 6, some or all of these provided functions may be mounted using a dedicated hardware circuit (for example, ASIC or FPGA). Alternatively, the main part of security unit 210 may be implemented using hardware (for example, an industrial personal computer based on a general-purpose personal computer) according to a general-purpose architecture. In this case, the plurality of OSs having different uses may be executed in parallel using a virtualization technology, and the required application may be executed on each OS.

### (d. Hardware configuration of support device 110)

A hardware configuration example of support device 110 that can be connected to control system 1 of the embodiment will be described below.

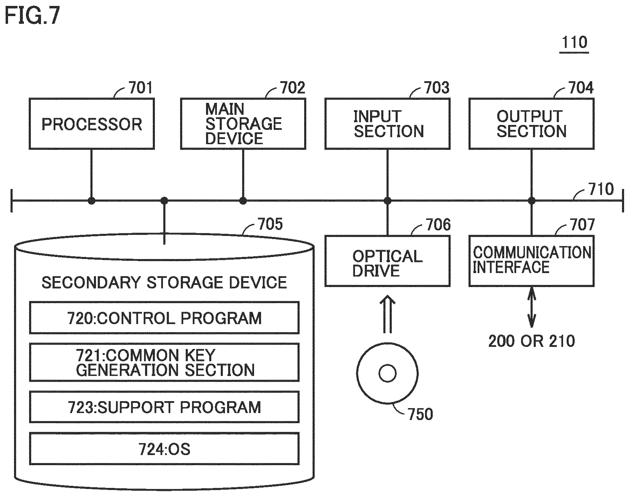

Fig. 7 is a schematic diagram illustrating the hardware configuration example of support device 110 that can be connected to control system 1 of the embodiment. Support device 110 can be implemented using a device (such as a personal computer or a tablet) having a general-purpose architecture.

Support device 110 includes a processor 701 such as a CPU or a GPU, a main storage device 702, an input section 703, an output section 704, a secondary storage device 705, an optical drive 706, and a communication interface 707. These components are connected to each other through a processor bus 710. Because main storage device 702 and secondary storage device 705 can be configured similarly to main storage device 504 and secondary storage device 503 of control unit 200, the description thereof will not be repeated.

Processor 701 reads a program (as an example, an OS 724 and a support program 723) stored in secondary storage device 705, develops the program in main storage device 702, and executes the program, thereby implementing various pieces of processing.

In addition to OS 724 implementing the basic function, support program 723 providing the function as support device 110 is stored in secondary storage device 705. Support device 110 (substantially processor 701) executes support program 723 to implement functions of various support tools provided by support device 110. The support tool provides a program development environment in support device 110.

In addition, secondary storage device 705 stores a control program 720 produced using the support tool and a common key generation program 721. Control program 720 may be a source code of the program executed by control unit 200. In addition, control program 720 may include an execution file of the program executed by control unit 200.

Common key generation program 721 generates the common key distributed to control unit 200 and security unit 210. Based on the acceptance of the input of the common key generation instruction, processor 701 determines whether the user who inputs the common key generation instruction has the authority to distribute the common key by arbitrary authentication means such as the password authentication or the biometric authentication. Processor 701 generates the common key only when determining that the user who inputs the common key generation instruction has the authority to distribute the common key. In one aspect, the user authentication processing may be performed after the common key generation instruction is received. In another aspect, the user authentication processing may be performed before the common key generation instruction is received. Processor 701 can distribute the common key to control unit 200 and security unit 210 by any communication means.

In one aspect, secondary storage device 705 may store the encrypted control program. Furthermore, secondary storage device 705 may store the key encrypting the control program 720 and the encryption processing program executing encryption processing. In addition, secondary storage device 705 may store the simple encryption processing program that executes the encryption processing simpler and faster than the encryption processing program. Processor 701 can generate the simple encrypted control program by executing the simple encryption processing program.

Input section 703 is configured by a keyboard, a mouse, and the like, and receives the user operation. In one aspect, input section 703 may further include a camera, a microphone, and any other device that acquires organism information. In another aspect, these devices may be connected to support device 110 through communication interface 707. Output section 704 is configured by a display, various indicators, a printer, or the like and outputs a processing result and the like from processor 701.

Support device 110 includes optical drive 706. Optical drive 706 reads the program stored in recording medium 750 (for example, an optical recording medium such as a digital versatile disc (DVD)) from recording medium 750, and installs the program in secondary storage device 705 or the like.

Communication interface 707 can transmit and receive the data to and from control unit 200 or security unit 210 included in control system 1 through an arbitrary communication medium such as USB or Ethernet.

Support program 723 and the like executed by support device 110 may be installed through computer-readable recording medium 750, or installed by being downloaded from the server device or the like on the network. The functions provided by support device 110 of the embodiment are implemented using a part of modules provided by OS.

Although the configuration example in which the required functions as support device 110 are provided by processor 701 executing the program has been described in Fig. 7, some or all of these provided functions may be mounted using a dedicated hardware circuit (for example, ASIC or FPGA). In the embodiment, support device 110 may be removed from control system 1 during the operation of control system 1.

### <C. Common key distribution procedure and authentication procedure using common key>

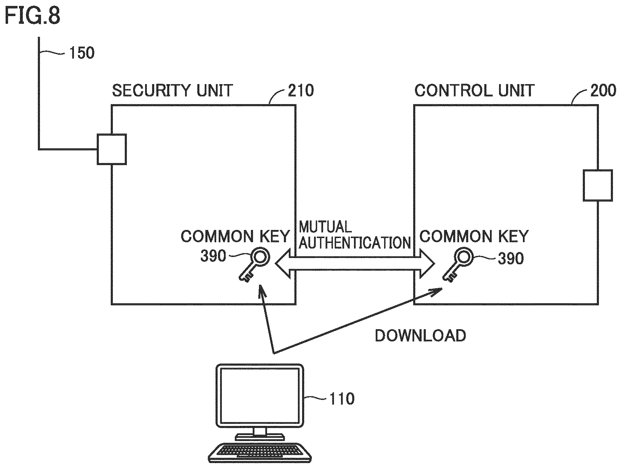

With reference to Figs. 8 to 11, details of a common key distribution procedure and an authentication procedure using the distributed common key will be described below.

Fig. 8 is a view illustrating an example of the common key distribution procedure and the authentication procedure using the common key during the setup. The example in Fig. 8 corresponds to the processing for distributing common key 390 and the authentication processing using common key 390 during the setup (first timing) of control system 1 described with reference to Fig. 3.

In a first step, support device 110 receives a request executing the common key generation instruction (or a common key distribution instruction) from the user. In one aspect, support device 110 may receive the input of the common key generation instruction through input section 703. In another aspect, support device 110 may receive the common key generation instruction through communication interface 707.

In a second step, support device 110 determines whether the user who inputs the common key generation instruction has the authority to distribute common key 390 by arbitrary authentication means such as the password authentication or the biometric authentication. In one aspect, the authentication processing may be executed before the request executing the common key generation instruction is accepted, or may be executed after the request for executing the common key generation instruction is accepted. In the authentication processing, support device 110 may receive the input of the password, the organism information, or the like through input section 703.

In a third step, support device 110 generates common key 390 using common key generation program 721 based on the successful authentication processing. In one aspect, when common key 390 needs to be installed in a large number of instruments during the setup, support device 110 may generate a plurality of common keys 390. For example, support device 110 may generate a common key 390A for a control system 1A (a control unit 200A and a security unit 210A) and a common key 390B for a control system 1B (a control unit 200B and a security unit 210B).

In a fourth step, support device 110 distributes generated common key 390 to control unit 200 and security unit 210. In one aspect, when common key 390 needs to be installed in the large number of instruments during the setup, support device 110 may simultaneously distribute common key 390 to each instrument through network 150. In another aspect, support device 110 may distribute common key 390 to any instrument such as safety unit 220 and functional unit 230 in addition to security unit 210. In this case, control unit 200 can also perform the mutual authentication with any instrument such as safety unit 220 and functional unit 230 using common key 390. Control unit 200 can perform the mutual authentication with each unit using an individual common key.

In a fifth step, control unit 200 stores downloaded (distributed) common key 390 in secondary storage device 503. Security unit 210 stores downloaded (distributed) common key 390 in secondary storage device 608.

In a sixth step, control unit 200 and security unit 210 authenticate each other using common key 390. Control unit 200 allows security unit 210 to access the information asset in control unit 200 based on the successful mutual authentication.

As described above, during the setup of control system 1, the user having the authority to generate common key 390 distributes common key 390 to control unit 200 and security unit 210 using support device 110. As a result, control unit 200 can start the operating in the state of being connected to security unit 210 in which the reliability is verified.

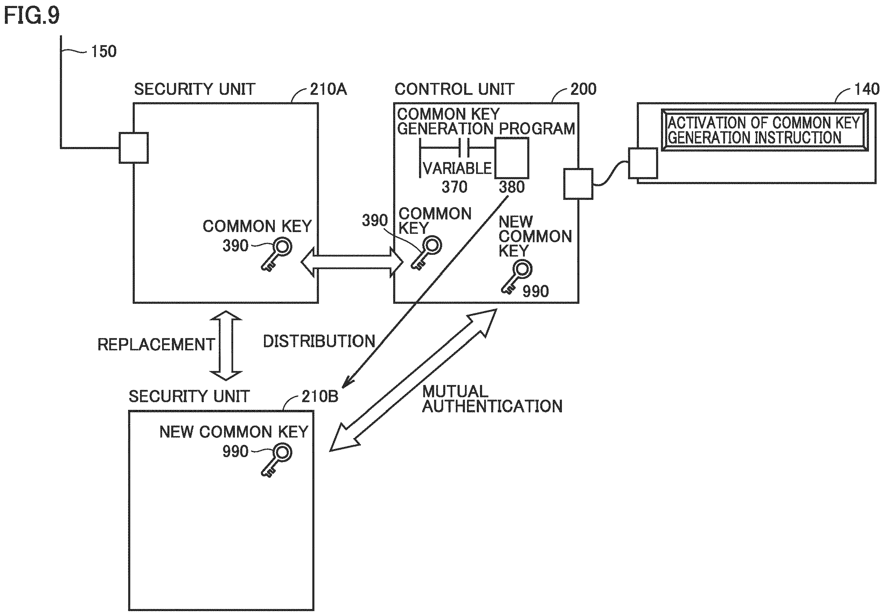

Fig. 9 is a view illustrating an example of the procedure of distributing the common key and the authentication procedure using the common key during replacement of security unit 210. The example in Fig. 9 corresponds to the processing for distributing the common key and the authentication processing using the common key during the replacement (second timing) of security unit 210 described with reference to Fig. 3. In the example of Fig. 9, security unit 210A is replaced with security unit 210B due to a failure or the like.

In the first step, security unit 210A executes backup processing for setting security unit 210A. In one aspect, security unit 210A may execute the backup processing based on the acceptance of the request for the backup processing from control unit 200, support device 110, display device 140, or the like. In another aspect, security unit 210A may execute the backup processing based on pressing of the switch or the like provided in a housing.

As an example of the backup processing, security unit 210A may transmit the setting of security unit 210A to control unit 200 through bus 530. As another example of the backup processing, security unit 210A may store the setting of security unit 210A in memory card 640 through memory card interface 614. In one aspect, security unit 210A may store the setting of security unit 210A in an arbitrary storage medium such as an SD card or a USB memory.

In the second step, the user removes security unit 210A from control unit 200. Subsequently, the user connects security unit 210B to control unit 200. At this point, security unit 210B does not have common key 390. For this reason, control unit 200 does not allow security unit 210B to access the information asset in control unit 200.

In the third step, the user transmits the common key generation instruction generating a new common key 990 to control unit 200 through any information processing device such as display device 140 or support device 110.

In the fourth step, control unit 200 determines whether the user who inputs the common key generation instruction has the authority to distribute new common key 990 by arbitrary authentication means such as the password authentication or the biometric authentication. In one aspect, the authentication processing may be executed before the request executing the common key generation instruction is accepted, or may be executed after the request for executing the common key generation instruction is accepted. In another aspect, in the authentication processing, control unit 200 may receive the input of the password, the biometric information, or the like through an arbitrary information processing device such as display device 140 or support device 110.

In the fifth step, control unit 200 generates new common key 990 using common key generation program 380 based on the successful authentication processing.

In the sixth step, control unit 200 stores new common key 990 in secondary storage device 503. In addition, control unit 200 transmits new common key 990 to security unit 210B through bus 530.

In a seventh step, control unit 200 and security unit 210 authenticate each other using common key 390. Control unit 200 allows security unit 210 to access the information asset in control unit 200 based on the successful mutual authentication.

In an eighth step, security unit 210B takes over the setting of security unit 210A. When the setting of security unit 210A is transmitted to control unit 200, control unit 200 transmits the setting of security unit 210A to security unit 210B through bus 530. Security unit 210B reads and uses the setting received from control unit 200.

When the setting of security unit 210A is stored in the storage medium such as memory card 640, security unit 210B reads and uses the setting stored in memory card 640 through memory card interface 614. In one aspect, security unit 210B may read and use the setting from an arbitrary storage medium such as an SD card or a USB memory.

As described above, during the replacement of security unit 210, control unit 200 generates new common key 990 based on the common key generation instruction by the user having the authority to generate common key 990. Furthermore, control unit 200 distributes new common key 990 to security unit 210B through highly-secure bus 530. Only control unit 200 and security unit 210 are connected to bus 530. Consequently, it is difficult for the malicious person to steal common key 990 during the distribution of new common key 990 through bus 530. In this manner, control unit 200 generates and distributes the common key in a secure manner, thereby preventing an unauthorized user from replacing security unit 210 and enabling easy and secure replacement of security unit 210.

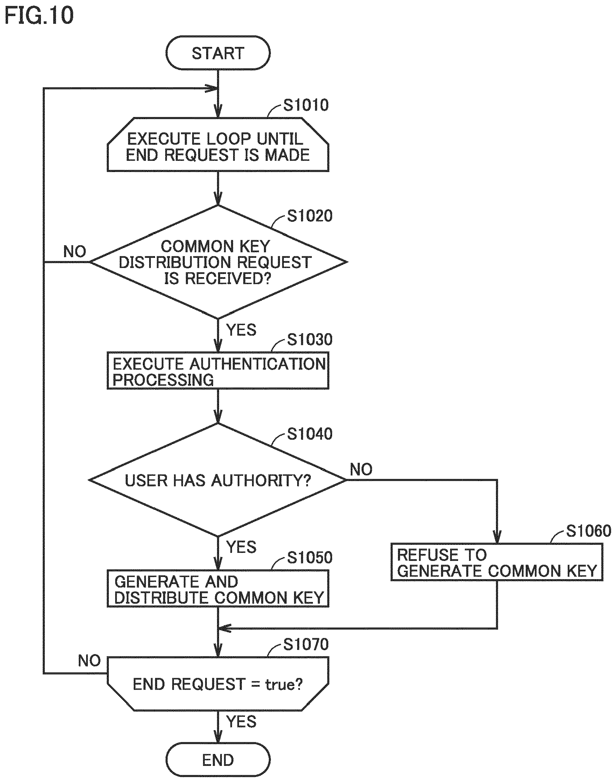

Fig. 10 is a flowchart illustrating an example of the procedure of distributing the common key and the authentication procedure using the common key during the setup. The processing in Fig. 10 is executed by support device 110. In one aspect, processor 701 may read the program performing the processing in Fig. 10 from secondary storage device 705 to main storage device 702 and execute the program. In another aspect, a part or all of the processing can be implemented as a combination of circuit elements configured to execute the processing.

In step S1010, processor 701 repeatedly executes the processing in and after step S1020 until the end request is made. In step S1020, processor 701 determines whether the common key distribution request (common key generation request) is accepted. In one aspect, processor 701 may receive the common key distribution request through either input section 703 or communication interface 707. When determining that the common key distribution request is received (YES in step S1020), processor 701 shifts the control to step S1030. Otherwise (NO in step S1020), processor 701 shifts the control to step S1010.

In step S1030, processor 701 executes the processing for authenticating the user who has input the common key distribution request. In one aspect, processor 701 may execute the processing of step S1030 before the processing of step S1020. In another aspect, processor 701 may perform the authentication processing using any means such as the password or the biometric information.

In step S1040, processor 701 determines whether the user who inputs the common key distribution request has the authority to distribute the common key based on the result of the authentication processing. When processor 701 determines that the user who inputs the common key distribution request has the authority to distribute the common key (YES in step S1040), the control proceeds to step S1050. Otherwise (NO in step S1040), processor 701 shifts the control to step S1060.

In step S1050, processor 701 generates the common key and distributes the common key to control unit 200 and security unit 210. Control unit 200 and security unit 210 execute the mutual authentication using the distributed common key. In step S1060, processor 701 refuses to generate the common key (does not generate the common key). More specifically, processor 701 does not execute the common key generation process and transmits a message or the like notifying display device 140 or the like not to produce the common key.

In step S1070, processor 701 determines whether the end request is made. When determining that the end request is made (YES in step S1070), processor 701 ends the processing. Otherwise (NO in step S1070), processor 701 shifts the control to step S1010.

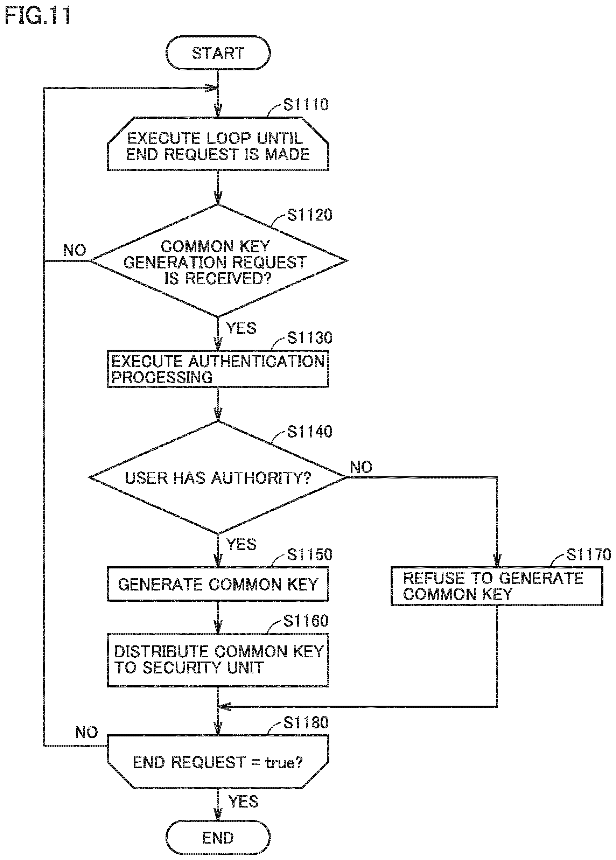

Fig. 11 is a flowchart illustrating an example of the procedure of distributing the common key and the authentication procedure using the common key during the exchange of security unit 210. The processing in Fig. 11 is executed by control unit 200. In one aspect, processor 501 may read the program performing the processing in Fig. 10 from secondary storage device 503 to main storage device 504 and execute the program. In another aspect, a part or all of the processing can be implemented as a combination of circuit elements configured to execute the processing.

In step S1110, processor 501 repeatedly executes the processing in and after step S1120 until the end request is made. In step S1120, processor 501 determines whether the common key generation request is received through display device 140, support device 110, and the like. When determining that the common key generation request is received (YES in step S1120), processor 501 shifts the control to step S1130. Otherwise (NO in step S1120), processor 701 shifts the control to step S1110.

In step S1130, processor 501 executes authentication processing of the user who inputs the common key generation request. In one aspect, processor 501 may execute the processing of step S1130 before the processing of step S1 120. In another aspect, processor 501 can execute the authentication processing using arbitrary means such as a password or biometric information through display device 140, support device 110, and the like.

In step S1140, processor 501 determines whether the user who inputs the common key generation request has authority to generate the common key based on the result of the authentication processing. When processor 501 determines that the user who inputs the common key generation request has the authority to generate the common key (YES in step S1140), the control proceeds to step S1150. Otherwise (NO in step S1140), processor 501 shifts the control to step S1170.

In step S1150, processor 501 generates the common key. In step S1160, processor 501 stores the generated common key in secondary storage device 503, and distributes the common key to security unit 210 through bus 530. Control unit 200 and security unit 210 execute mutual authentication using the common key. In step S1170, processor 501 refuses to generate the common key (does not generate the common key).

In step S1180, processor 501 determines whether an end request is made. When determining that the termination request is made (YES in step S1180), processor 501 terminates the processing. Otherwise (NO in step S1180), processor 501 shifts the control to step S1110.

As described above, in the technique of the embodiment, when control system 1 is set up, the user having the authority to generate the common key distributes the common key to control unit 200 and security unit 210 using support device 110. As a result, control unit 200 can start the operating in the state of being connected to security unit 210 in which the reliability is verified.

In addition, during the replacement of security unit 210, control unit 200 generates the new common key based on the common key generation instruction by the user having the authority to generate the new common key. Further, the control unit 200 distributes the new common key to the replaced security unit 210 via the secure bus 530. In this way, control unit 200 prevents an unauthorized user from replacing security unit 210, and enables easy and safe replacement of security unit 210.

### <D. Appendix>

As described above, the embodiment includes the following disclosure.

### (Configuration 1)

A control system (1) including:
a control unit (200); and
a communication unit (210),
in which
the control unit (200) and the communication unit (210) are configured to be detachable, and
the control unit (200) authenticates the communication unit (210) connected to the control unit (200) using a common key; and allows the communication unit (210) to access data in the control unit (200) based on a fact that the communication unit (210) is checked to have the common key as a result of authentication.

### (Configuration 2)

The control system (1) of configuration 1, further including a device (110) configured to distribute the common key,
in which the device (110) receives an instruction to distribute the common key, and transmits the common key to the control unit (200) and the communication unit (210) based on a fact that processing for authenticating a user who inputs the instruction to distribute the common key succeeds.

### (Configuration 3)

The control system (1) of configuration 1 or 2, in which
when the communication unit (210) is replaced with a new communication unit (210), the control unit (200) generates a new common key and sends the new common key to the new communication unit (210), and
the sending the new common key to the new communication unit (210) includes:
   reception of input of an instruction to generate the new common key; and
   transmission of the generated new common key to the communication unit (210) based on a fact that the processing for authenticating the user who inputs the instruction to generate the common key succeeds.

### (Configuration 4)

The control system (1) of configuration 3, in which
the control unit (200) is connected to the new communication unit (210) through a bus (530), and distributes the common key to the new communication unit (210) through the bus (530).

### (Configuration 5)

The control system (1) of configuration 4, in which
the control unit (200) receives a setting of the communication unit (210) from the communication unit (210) through the bus (530) during replacement with the new communication unit (210), and transmits the setting of the communication unit (210) to the new communication unit (210) through the bus (530) after distribution of the common key.

### (Configuration 6)

The control system (1) of any one of configurations 3 to 5, in which
the communication unit (210) stores the setting of the communication unit (210) in a detachable storage medium during the replacement with the new communication unit (210), and
the new communication unit (210) reads the setting of the communication unit (210) from the detachable storage medium after obtaining the new common key.

### (Configuration 7)

A control method for a control system (1) in which a control unit (200) and a communication unit (210) are detachably attached, the control method including:
authenticating the communication unit (210) connected to the control unit (200) using a common key; and
allowing the communication unit (210) to access data in the control unit (200) based on a fact that the communication unit (210) is checked to have the common key as a result of authentication.

### (Configuration 8)

The control method of configuration 7, further including:
receiving an instruction to distribute the common key; and
transmitting the common key to the control unit (200) and the communication unit (210) based on a fact that processing for authenticating a user who inputs the instruction to distribute the common key succeeds.

### (Configuration 9)

The control method of configuration 7 or 8, further including generating a new common key based on that the communication unit (210) is replaced with a new communication unit (210), and sending the new common key to the new communication unit (210),
in which the sending the new common key to the new communication unit (210) includes:
receiving input of an instruction to generate the new common key; and
transmitting the generated new common key to the communication unit (210) based on a fact that the processing for authenticating the user who inputs the instruction to generate the common key succeeds.

### (Configuration 10)

The control method of configuration 9, in which the new common key is distributed from the control unit (200) to the new communication unit (210) through a bus (530).

### (Configuration 11)

The control method of configuration 10, further including: transmitting a setting of the communication unit (210) from the communication unit (210) to the control unit (200) through the bus (530) during replacement with the new communication unit (210); and
transmitting the setting of the communication unit (210) from the control unit (200) to the new communication unit (210) through the bus (530) after the distribution of the common key.

### (Configuration 12)

The control method of any one of configurations 9 to 11, further including:
storing the setting of the communication unit (210) in a detachable storage medium during replacement with the new communication unit (210); and
reading the setting of the communication unit (210) from the detachable storage medium into the new communication unit (210) after obtaining the new common key.

It should be considered that the disclosed embodiment is an example in all respects and not restrictive. The scope of the present disclosure is defined by not the description above, but the claims, and it is intended that all modifications within the meaning and scope of the claims and their equivalents are included in the present invention. In addition, the disclosed contents described in the embodiment and the modification are intended to be implemented alone or in combination as much as possible.

### REFERENCE SIGNS LIST

1: control system, 100: network system, 110: support device, 120: server device, 130: gateway, 140: display device, 150: network, 160: field network, 170: control target, 200: control unit, 210: security unit, 220: safety unit, 230: functional unit, 240: power supply unit, 250: information asset, 370: variable, 380, 721: common key generation program, 390, 990: common key, 501, 601, 701: processor, 502, 604: chip set, 503, 608, 705: secondary storage device, 504, 606, 702: main storage device, 505, 620: communication controller, 506, 624: indicator, 507: switch interface, 508: dip switch, 509: internal bus controller, 510, 511, 512, 616, 618: network controller, 513, 614: memory card interface, 514, 612: USB controller, 520, 635: system program, 521: Service program, 523, 633: nonvolatile storage region, 524: encrypted control program, 525: volatile storage region, 526: encrypted control program, 530: bus, 540, 640: memory card, 605: secure chip, 630: simple decryption processing program, 631: encryption processing program, 632: decryption processing program, 690: key, 703: input section, 704: output section, 706: optical drive, 707: communication interface, 710: processor bus, 720: control program, 723: support program, 724: OS, 750: recording medium

## Claims

1. A control system comprising:
a control unit; and
a communication unit,
wherein
the control unit and the communication unit are configured to be detachable, and
the control unit authenticates the communication unit connected to the control unit using a common key, and allows the communication unit to access data in the control unit based on a fact that the communication unit is checked to have the common key as a result of authentication.

2. The control system according to claim 1, further comprising a device configured to distribute the common key,
wherein the device receives an instruction to distribute the common key, and transmits the common key to the control unit and the communication unit based on a fact that processing for authenticating a user who inputs the instruction to distribute the common key succeeds.

3. The control system according to claim 1 or 2, wherein
when the communication unit is replaced with a new communication unit, the control unit generates a new common key and sends the new common key to the new communication unit, and
the sending the new common key to the new communication unit includes:
reception of input of an instruction to generate the new common key; and
transmission of the generated new common key to the communication unit based on a fact that the processing for authenticating the user who inputs the instruction to generate the common key succeeds.

4. The control system according to claim 3, wherein the control unit is connected to the new communication unit through a bus, and distributes the common key to the new communication unit through the bus.

5. The control system according to claim 4, wherein the control unit receives a setting of the communication unit from the communication unit through the bus during replacement with the new communication unit, and transmits the setting of the communication unit to the new communication unit through the bus after distribution of the common key.

6. The control system according to any one of claims 3 to 5, wherein
the communication unit stores the setting of the communication unit in a detachable storage medium during the replacement with the new communication unit, and
the new communication unit reads the setting of the communication unit from the detachable storage medium after obtaining the new common key.

7. A control method for a control system in which a control unit and a communication unit are detachably attached, the control method comprising:
authenticating the communication unit connected to the control unit using a common key; and
allowing the communication unit to access data in the control unit based on a fact that the communication unit is checked to have the common key as a result of authentication.

8. The control method according to claim 7, further comprising:
receiving an instruction to distribute the common key; and
transmitting the common key to the control unit and the communication unit based on a fact that processing for authenticating a user who inputs the instruction to distribute the common key succeeds.

9. The control method according to claim 7 or 8, further comprising generating a new common key based on that the communication unit is replaced with a new communication unit, and sending the new common key to the new communication unit,
wherein the sending the new common key to the new communication unit includes:
receiving input of an instruction to generate the new common key; and
transmitting the generated new common key to the communication unit based on a fact that the processing for authenticating the user who inputs the instruction to generate the common key succeeds.

10. The control method according to claim 9, wherein the new common key is distributed from the control unit to the new communication unit through a bus.

11. The control method according to claim 10, further comprising:
transmitting a setting of the communication unit from the communication unit to the control unit through the bus during replacement with the new communication unit; and
transmitting the setting of the communication unit from the control unit to the new communication unit through the bus after the distribution of the common key.

12. The control method according to any one of claims 9 to 11, further comprising:
storing the setting of the communication unit in a detachable storage medium during replacement with the new communication unit; and
reading the setting of the communication unit from the detachable storage medium into the new communication unit after obtaining the new common key.
